# EUROPEAN PATENT APPLICATION

(11) **EP 2 720 183 A1**
(43) Date of publication of application: **16.04.2014**
(21) Application number: 13186123.9
(22) Date of filing: 26.09.2013
(51) Int. Cl.: G06Q 30/02

(54) **Method and system for negotiating group offers while maintaining privacy of consumers**

(30) Priority: 11.10.2012 US 201213649422
(71) Applicant: Pitney Bowes Inc., Stamford, CT 06926-0700 (US)
(72) Inventor: Desmond, John G., Fairfield, CT Connecticut 06824 (US); Heiden, Richard W., Huntington, CT Connecticut 06484 (US); Olumofin, Femi, Trumbull, CT Connecticut 06611 (US); Tsipenyuk, Alla, Woodbridge, CT Connecticut 06525 (US); Ghatti, Venkat Ram, Stamford, CT Connecticut 06905 (US); Merola, John A., Hudson, NY New York 12534 (US); Obrea, Andrei, North Miami Beach, FL Florida 33179 (US)
(74) Representative: HOFFMANN EITLE

(57) **Abstract**

A method and system for maintaining the privacy of consumers (30,32,34) wishing to make a purchase while enabling them to benefit from a group discount is provided. Consumers register with a service provider (12) that maintains their personal information in private. When a consumer is interested in purchasing a product or patronizing a traditional "brick and mortar" establishment, the consumer provides information to the service provider (12) regarding such interest. The service provider (12) can query other registered consumers to determine if there are others that have a similar interest. Using the leverage of all the consumers (30,32,34) that respond to the query, the service provider (12) can negotiate with one or more merchants (40,42) to provide some type of group offer, without having to disclose the consumers' personal information. Upon successful negotiation of a group offer, the consumers will be provided with the offer.

## Description

The present invention relates to advertising offers, and in particular to a method and system for negotiating group offers while maintaining the privacy of consumers.

Conventional methods and systems for providing advertising offers to consumers via a network, e.g., the Internet, typically require the consumer to enter some type of personal information, including for example, name, physical address, e-mail address, etc. on the merchant's website before the consumer can receive offers. Merchants can collect this personal information for their own future use, or in many cases for selling to other merchants for their own use. This is an undesirable situation for many consumers, which causes many consumers to forego such offers in exchange for keeping their personal information private. Additionally, because most consumers, when they do make purchases from a website, are acting individually, there is no way for each consumer to benefit from savings that may be associated with group discounts that a merchant may offer.

The present invention alleviates the problems described above by maintaining the privacy of consumers wishing to make a purchase while enabling them to benefit from a group discount. Consumers register with a service provider that maintains their personal information in private. When a consumer is interested in purchasing a product or patronizing a traditional "brick and mortar" establishment, the consumer provides information to the service provider regarding such interest. The service provider can query other registered consumers to determine if there are others that have a similar interest. Using the leverage of all the consumers that respond to the query, the service provider can negotiate with one or more merchants to provide some type of group offer, without having to disclose the consumers' personal information. Upon successful negotiation of a group offer, the service provider will provide the consumers with the offer via, for example, a coupon via physical mail or e-mail, website link, etc. Thus, consumers are able to benefit from offers negotiated for a group of consumers with similar purchase intentions, without having to provide any personal information to the merchants providing such offers.

Therefore, it should now be apparent that the invention substantially achieves all the above aspects and advantages. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

The accompanying drawings illustrate presently preferred embodiments of the invention, and together with the general description given above and the detailed description given below, serve to explain the principles of the invention. As shown throughout the drawings, like reference numerals designate like or corresponding parts.
Figure 1 is a block diagram of a system for negotiating group offers while maintaining the privacy of consumers according to an embodiment of the present invention; and
Figure 2 is a flowchart of a method of negotiating group offers while maintaining the privacy of consumers that may be implemented in the system shown in Figure 1 according to an embodiment of the present invention.

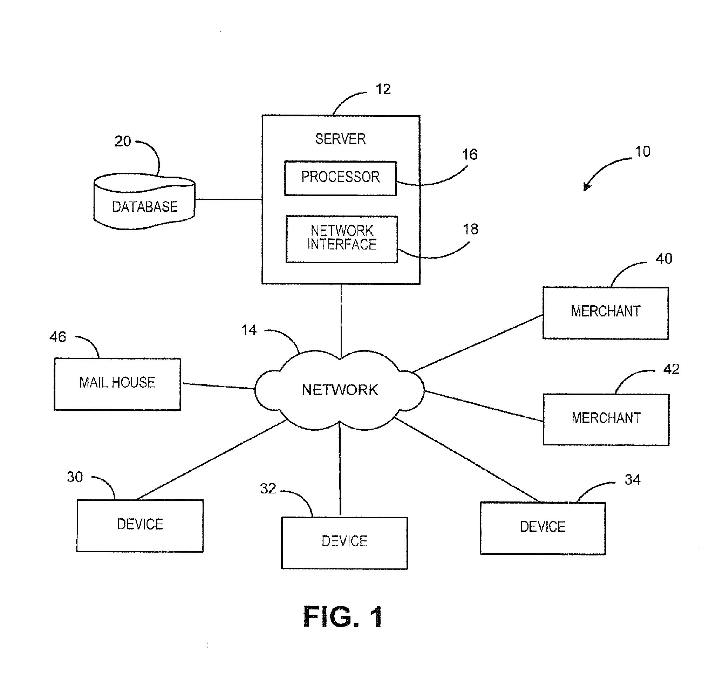

In describing the present invention, reference is made to the drawings, wherein there is seen in Fig. 1 in block diagram form a portion of a system 10 that can be used to negotiate group offers while maintaining the privacy of consumers according to an embodiment of the present invention. System 10 includes a server 12 operated by a service provider that is coupled to a network 14, such as, for example the Internet. Server 12 may be a mainframe or the like that includes at least one processing device 16. Server 12 may be specially constructed for the required purposes, or it may comprise a general purpose computer selectively activated or reconfigured by a computer program (described further below) stored therein. Such a computer program may alternatively be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, which are executable by the processing device 16. One of ordinary skill in the art would be familiar with the general components of a computing system upon which the method of the present invention may be performed. A network interface 18 is provided to allow the server 12 to communicate with other computing devices 30, 32, 34 and one or more merchants 40, 42 via the network 14. Computing devices 30, 32, 34 can include personal computers, tablets, smartphones or any other type of electronic device that has network capability and can allow a consumer to access the server 12 via the network 14. It should be understood that while three devices 30, 32, 34 are illustrated in Fig. 1, there is no limit to the number of devices and/or users of such devices (consumers). Additionally, the number of merchants 40, 42 is not limited as well. Merchants 40, 42 can be any type of retail establishment, including on-line retailers and conventional brick-and-mortar retailers, any type of service provider, or any other type of establishment that offers goods and/or services to customers.

System 10 also includes a database 20 that is in electronic communication with the server 12. Database 20 securely stores certain personal and/or confidential information provided by users of devices 30, 32, 34. Such personal and/or confidential information may include, without limitation, certain demographic information for each user, and information relating to the income, credit history, interests (e.g., sports, hobbies, etc.), and purchasing history (e.g., particular products purchased from particular sources) of each user (for convenience, such personal and/or confidential information may be referred to herein simply as personal information). In a preferred embodiment, each user provides such information to the server 12 because the user desires to participate in potential group offers from merchants while at the same time desiring to keep their personal information secret. The users may do so knowing that the information will be stored in confidence and not be provided to third parties such as merchants.

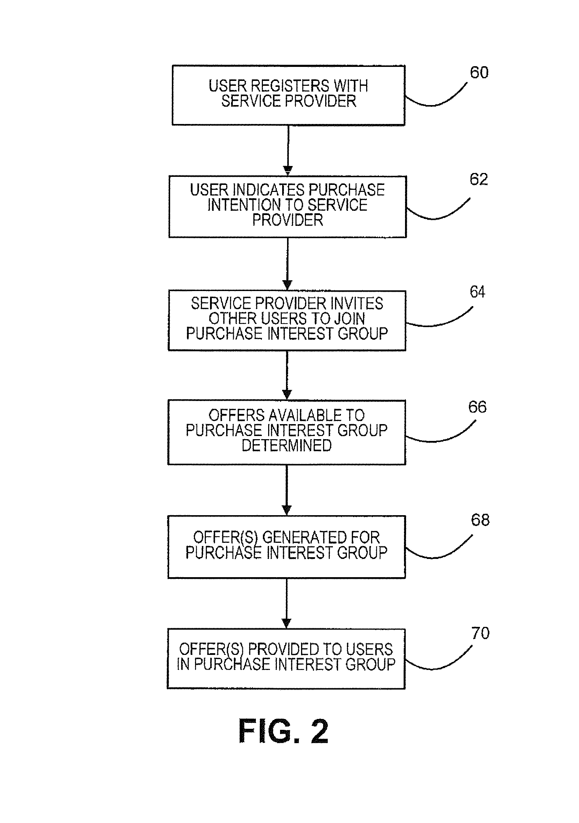

Figure 2 is a flowchart that illustrates an example of the operation of the system 10 shown in Figure 1 according to an embodiment of the present invention. The system 10 allows users to subscribe to products or services they are planning to purchase at a future time, and receive offers, deals, discount, free gift certificate, bonus or similar benefits related to such products or services. The server 12 enables the system and interacts with merchants 40, 42 to negotiate group discount offers for consumers. Consumers will have assurance they will not be targets for spam offers after a validity period that they specify with their subscription. The delivery of digital and print offers is done in a way that does not disclose to a merchant the personal information of the consumers receiving offers. Merchants 40, 42 have assurance that prospective customers are serious about their commitments to fulfill their purchase intentions. Hence, merchants 40, 42 can afford to give deep discounts and compelling offers that customers would not want to resist.

In step 60, a user (also referred to as consumer), using a computing device 30, registers with the service provider that operates the server 12 by logging onto and providing information to a website hosted by the server 12. The service provider that operates the server 12 could be any type of service provider, such as, for example, an e-mail service provider, electronic bill presentment service provider, or any other type of trusted service provider. Users can provide demographic information (e.g., age, sex, income, etc.) along with other information, including, for example, hobbies, interests, retail establishments they frequent, etc. The information provided by the users during registration can be stored in the database 20. The present invention leverages the fact that the service provider can have real time communication with consumers and the means to ask them their current needs.

In step 62, a registered consumer can indicate an interest in making an upcoming purchase by logging onto the website hosted by the server 12 using a computing device 30. For example, the interest in making an upcoming purchase can include an indication that the consumer is going to shop at a specific retail establishment in the next several days, or that the consumer is going to make a purchase of a specific product in the very near future. The consumer's indication can be as broad as a category, e.g., clothing, electronics, hardware, or as narrow and specific as the item and/or the online/brick-and-mortar store where the user would like to make the purchase, e.g., a television at BestBuy. Preferably, the consumer will specify a desired expiration date for this purchase interest, which can be, for example, from within a few days to a few months. Optionally, the consumer can be issued an offer email address and/or an offer postal address ID, both of which are unique. The offer email address is a temporary address that is only valid for receiving email offers until the expiration date. After that date, the offer e-mail address will be deleted. The consumer may optionally link her regular email address to this temporary email (via email forwards) to have all offers sent to the temporary email forwarded to her regular email. The service provider that operates the server 12 would similarly link the postal address ID to the consumer's actual postal address. Both the offer email and postal address IDs are meant to serve the consumer for the duration of her current shopping experience.

In step 64, the server 12 will create a purchase interest group based on the consumer's indications provided in step 62 and invite other registered users (consumers) to join the group. Invitations to join a purchase interest group can be sent by e-mail, text or any other means to other registered users, or a general invitation can be provided via the website hosted by the server 12 that will allow other registered users to join. Such invitations can be sent to all registered users, or only some portion based on information stored in the database 20 as provided by each registered user. For example, during registration in step 60, a user may specify that she only wants to receive invitations to join purchase interest groups for certain types of products, e.g., clothing, electronics, etc, or only for specific merchants. Alternatively, a user can specify that she only wants to receive invitations to join a purchase interest group that matches one of her specified interests. A user could also request that no invitations be sent directly to her, and instead the user can log onto the website each day to see what new invitations are being made and decide if she wants to join the purchase interest group or not. When a user joins the purchase interest group, each user can optionally be issued an offer email address and/or an offer postal address ID as described above.

After some predetermined amount of time has passed or some predetermined number of consumers have joined a purchase interest group, in step 66 the server 12 will determine offers available to the purchase interest group from one or more merchants. A determination of the available offers can be made by negotiating with one or more merchants on behalf of the purchase interest group to obtain a discount, coupon or other offer using the leverage of the group buying power. The predetermined number of consumers can be based on the type of product, specific retail location, or any other factor and could be determined by the service provider that operates the server 12. Alternatively, merchants could specify to the service provider a minimum number of consumers required in order to extend some sort of offer, or ranges of users required for a certain offer, e.g., one to five users receive a 5% discount, 6-10 users receive a 10% discount, etc., that will be stored by the server 12 in for example, database 20, and provided when the required minimum number is met. Negotiations can be performed between the server 12 and a computer system operated by one or more merchants 40, 42 by the server 12 preparing a request for an offer, specifying the discount percentage, number of buyers, and other information as required by the merchants and sending it to the merchant's computer system. The merchant's computer system can then compare the request parameters to certain business rules stored by the merchant's computer system, and either accept or reject the proposed offer based on compliance with the eligibility requirements specified by the business rules. Additionally, the merchant's computer system can generate a counter-offer if the proposed offer is rejected and return this to the server 12. Server 12 can then determine, based on business rules stored by the server 12, whether to accept or reject the counter-offer. Preferably, for situations in which a specific retailer is not specified, the server 12 would engage a plurality of merchants, e.g., merchants 40, 42, to compete to provide different offers to the users. In some situations, merchants might require that each consumer that is presented with and accepts an offer provide a deposit which will be applied to a purchase made by the consumer pursuant to the purchase interest group. This may help to further motivate consumers to fulfill their purchase intentions. The deposit can also serve to discourage consumers without any real desire to make purchases from registering with a purchase interest group.

In step 68, one or more offers is generated for the purchase interest group. This may be performed directly by the server 12 using pre-negotiated or on-demand negotiated offers with one or more merchants, or can be performed by merchants or the merchant's computer system in response to a request from the server 12. Offers can include, for example, discount coupons, special pricing deals, or any other type of offer. The generated offers may be provided with an expiration date, e.g., one day to several weeks.

Once one or more offers have been generated for the purchase interest group, then in step 70 the offer(s) can be provided to the consumers in the purchase interest group. The offers can be provided through any number of different channels, including, for example, via the service provider's website hosted by the server 12, an offer email address, and an offer postal address ID. Each of these channels will allow the consumer to use the offer to make purchases without compromising their privacy --- merchants should not learn the names, actual postal addresses, and actual email addresses of consumers, thereby preventing future targeting and spamming.

One way of providing the offer to the consumers would be to allow the consumer to print a copy of an offer from the website hosted by the server 12 and use it as a proof of eligibility during purchase fulfillment. Alternatively, digital offers on smart phone devices could be provided to each consumer in the purchase interest group. Offers could also be provided to consumers via the offer email address, and the consumer can print a proof for purchase fulfillment purposes. The offer could be sent directly from the server 12 to the consumer's regular email address or to the assigned offer email address. Alternatively, the merchant could be provided with the consumer's offer email address and the merchant could send the offer to the offer email address. If the offer is provided to the consumer by disclosing the offer email address to the merchant, then the merchant has a limited window with which it can target the same consumer with future offers (related or unrelated), as the offer email address will expire. However, the merchant would not be able to target the consumer after the expiry of the user's subscription, since the merchant is not provided with the consumer's regular email address. In some situations, the number of offers made by a merchant may be fewer than the number of consumers in the purchase interest group. Hence, consumers need to respond in a timely manner to lock-on to one or more of the available offers as soon as they receive alerts on the website hosted by server 12 or on their temporary email.

For consumers wishing to receive offers via physical mail, the temporary offer postal address ID can be used to maintain the users privacy. Merchants can utilize the services of a mail house 46 to print and send offers to consumers. The server 12 and mail house 46 can periodically establish a short-term cryptographic key (i.e., session key), with which they secure their communications. The server 12 encrypts the offer postal address ID for those users that desire to receive the offers by regular mail using the shared key with the mail house, attaches the mail house's network address and the offer number (or some other representation of the offer) and sends these to the merchant. The merchant, on receipt of this information, retrieves a local digital copy of the offer, and sends it together with encrypted offer postal address ID and an identification of the service provider (i.e., server 12) to the mail house network address. The mail house 46 receives the information, decrypts the offer postal address ID, and retrieves the actual postal address associated with the offer postal address ID from the server 12. The mail house 46 then prints the offer for mailing to the retrieved address. The printing and actual mailing follows the standard way mail houses print and mail statements and letters to customers of service organizations. If a merchant replays the same offer postal address ID ciphertext with a different offer, the mail house 46 can detect this attempt to send the different offer. If the mail house 46 does not detect this reply, the server 12 would detect that a request with that offer postal address ID has been sent previously and would deny providing the user's address if the validity period of the user's account has passed. Additionally, a replayed offer postal address ID ciphertext would no longer be able to be decrypted once the server 12 establishes a new symmetric key with the mail house 46.

While preferred embodiments of the invention have been described and illustrated above, it should be understood that these are exemplary of the invention and are not to be considered as limiting. Additions, deletions, substitutions, and other modifications can be made without departing from the spirit or scope of the present invention. Accordingly, the invention is not to be considered as limited by the foregoing description but is only limited by the scope of the appended claims.

## Claims

1. A method of providing advertising offers to consumers while maintaining privacy of personal information of the consumers, the method comprising:
receiving (62), by a processing device (16), a message indicating a purchase interest from a remote device (30,32,34) operated by a consumer;
creating (64), by the processing device (16), a purchase interest group based on the consumer's message, the purchase interest group including the consumer;
inviting (64), by the processor (16), other consumers to join the purchase interest group;
determining (66), by the processing device (16), offers available to the purchase interest group from one or more merchants (40,42) based on a number of consumers that joined the purchase interest group; and
providing (68, 70) an available offer from the one or more merchants to the consumer and other consumers that have joined the purchase interest group,
wherein the one or more merchants (40, 42) are not provided with personal information of the consumer or other consumers.

2. The method of claim 1, wherein the message indicating a purchase interest includes a specific product or a product category desired to be purchased by the consumer.

3. The method of claim 1 or 2, wherein the message indicating a purchase interest includes a specific retail establishment where the consumer will shop.

4. The method of any preceding claim, wherein the message indicating a purchase interest includes an expiration date for the purchase interest.

5. The method of claim 4, further comprising issuing, by the processing device (16), at least one of a temporary offer email address and a temporary offer postal address ID to consumers that join the purchase interest group that will expire on the expiration date for the purchase interest.

6. The method of any preceding claim, wherein inviting, by the processing device (16), other consumers to join the purchase interest group further comprises sending an email or text message to other consumers inviting the other consumers to join the purchase interest group.

7. The method of claim 6, wherein the other consumers are selected by the processing device (16) to send an email or text message based on information and preferences of the other consumers stored in a database.

8. The method of any preceding claim, wherein inviting, by the processing device (16), other consumers to join the purchase interest group further comprises providing, by the processing device (16), a general invitation to join the purchase interest group on a website.

9. The method of any preceding claim, wherein determining, by the processing device (16), offers available to the purchase interest group from one or more merchants based on a number of consumers that joined the purchase interest group further comprises:
determining, by the processing device (16), that a predetermined amount of time has passed or a predetermined number of consumers have joined the purchase interest group.

10. The method of any preceding claim, wherein determining, by the processing device (16), offers available to the purchase interest group from one or more merchants (40,42) based on a number of consumers that joined the purchase interest group further comprises:
retrieving from a database (20), by the processing device (16), offers from one or more merchants (40,42) based on the number of consumers that joined the purchase interest group.

11. The method of any preceding claim, wherein determining, by the processing device (16), offers available to the purchase interest group from one or more merchants (40,42) based on a number of consumers that joined the purchase interest group further comprises:
sending, by the processing device (16), a request for an offer to one or more merchants (40,42), the request including a discount percentage and a number of consumers.

12. The method of claim 11, further comprising:
receiving, by the processing device (16), a counter-offer from one or more merchants; and
determining, by the processing device (16), whether to accept or reject the counter-offer based on business rules retrieved by the processing device (16).

13. The method of any preceding claim, wherein providing an available offer from the one or more merchants to the consumer and other consumers that have joined the purchase interest group further comprises:
sending the available offer to a temporary offer email address provided to each consumer in the purchase interest group.

14. The method of any preceding claim, wherein providing an available offer from the one or more merchants to the consumer and other consumers that have joined the purchase interest group further comprises:
printing the available offer and mailing it to a temporary offer postal address ID assigned to each consumer.

15. The method of any preceding claim, wherein the remote device (30,32,34) operated by a consumer includes at least one of a personal computer, tablet, or smartphone.
